# EUROPÄISCHE PATENTSCHRIFT

(11) **EP 1 246 345 B1**
(45) Veröffentlichungstag und Bekanntmachung des Hinweises auf die Patenterteilung: **12.10.2005**
(21) Anmeldenummer: 01107309.5
(22) Anmeldetag: 23.03.2001
(51) Int. Cl.: H02K 5/22

(54) **Elektromotor mit elektronischer Steuerung**
Electrical motor with electronic control
Moteur électrique à commande électronique

(43) Veröffentlichungstag der Anmeldung: 02.10.2002
(73) Patentinhaber: GRUNDFOS A/S, DK-8850 Bjerringbro (DK)
(72) Erfinder: Bomholt, John, 8382 Hinne Rup (DK); Jensen, Jorgen Elkjer, 8850 Bjerringbro (DK); Sorensen, Troels, 8800 Viborg (DK)
(74) Vertreter: Vollmann, Heiko

(56) Entgegenhaltungen:
- EP-A- 0 304 574
- EP-A- 0 844 730
- WO-A-00/05806

## Beschreibung

Die Erfindung betrifft einen Elektromotor mit elektronischer Steuerung, insbesondere mit Frequenzumrichtersteuerung gemäß den im Oberbegriff des Anspruchs 1 angegebenen Merkmalen.

Frequenzumrichtersteuerungen für Elektromotoren werden aufgrund der insbesondere in der Massenfertigung immer kleiner und kostengünstiger werdenden elektronischen Baugruppen heutzutage nicht nur bei Elektromotoren großer Leistung, sondern auch im mittleren bis unteren Leistungsbereich eingesetzt. Besonders vorteilhaft ist die Frequenzumrichtersteuerung bei Kreiselpumpenaggregaten, da durch die damit mögliche Drehzahlerhöhung häufig auch eine Wirkungsgradverbesserung und Leistungssteigerung bei unveränderter Baugröße erreicht wird.

Nach dem Stand der Technik ist es üblich, für jeden Aggregattyp eine gesonderte Steuerung vorzusehen, welche herstellerseitig so voreingestellt bzw. programmiert ist, dass eine optimale Abstimmung zwischen Frequenzumrichter und Motor sowie der davon angetriebenen Pumpe gegeben ist. Nachteilig ist jedoch hierbei, dass eine große Anzahl unterschiedlicher Steuerungen hergestellt und bevorratet werden muß, die sich teilweise nur hinsichtlich der implementierten Software unterscheiden.

Bei Frequenzumrichtersteuerungen für Motoren großer Leistung ist es bereits bekannt, innerhalb der Steuerung eine Mess- und Auswertelektronik vorzusehen, welche den an die Steuerung angeschlossenen Motor ausmisst und die Steuerung entsprechend der erfassten Motordaten anpasst.

Ein solches Ausmessen der elektrischen Kennwerte des Motors ist relativ aufwändig und für Frequenzumrichtersteuerungen kleinerer Bauart daher wenig praktikabel. Ein weiteres Problem ist, dass insbesondere bei den heute üblichen Pumpenbaureihen, die in der Regel wahlweise mit Frequenzumrichtersteuerung oder auch ohne eine solche angeboten werden, es vorkommen kann, dass für unterschiedliche Aggregattypen die gleichen Motortypen eingesetzt werden, also lediglich eine Variation in der pumpenseitigen Auslegung erfolgt. Bei solchen Pumpenaggregaten könnte eine selbsttätige Anpassung der Steuerung an den Motor, wie dies bei Frequenzumrichtersteuerungen hoher Leistung bekannt ist, nicht zur Anpassung der Steuerung an das angeschlossene Aggregat dienen, da eine Differenzierung über die elektrischen Kennwerte des Motors nicht möglich ist.

Aus EP-A-0 844 730 ist es bekannt, motorseitig einen Festwiderstand vorzusehen, wobei jedem Motortyp ein vorbestimmter Widerstandswert zugeordnet wird. Steuerungsseitig sind wiederum Mittel zur Erfassung dieses zur Identifizierung des Motortyps vorgesehenen Widerstands vorgesehen, über die dann die motortypspezifischen und in der Steuerung abgelegten Werte aufgerufen und für den Betrieb mit diesem Motortyp eingestellt werden. Dieses Verfahren bedingt motorseitig das Vorsehen eines gesonderten Widerstands und steuerungsseitig einen entsprechenden Messvorrichtung, um diesen Widerstand auszumessen, was vergleichsweise aufwändig ist.

Insoweit noch aufwändiger ist die aus WO-A-00/05806 bekannte Lösung, welcher dem Motor ein elektronischer Speicherchip zugeordnet ist, der sämtliche motorrelevanten Daten in digitaler Form abgespeichert hat, so dass bei Verbindung mit der Steuerung diese Zugriff auf die entsprechenden Daten hat.

EP 0 304 574 beschreibt eine Codier-einrichtung für Elektro werkzeuge um Parameter werte für die Steuerung vorzugeben.

Vor diesem Hintergrund liegt der Erfindung die Aufgabe zugrunde, einen gattungsgemäßen Elektromotor mit elektronischer Steuerung mit technischen einfachen Mitteln so auszustatten, dass auch steuerungsseitig mit geringem technischen Aufwand der jeweils angeschlossene Motortyp/Aggregattyp identifizierbar ist.

Diese Aufgabe wird gemäß der Erfindung durch die in Anspruch 1 angegebenen Merkmale gelöst. Vorteilhafte Ausgestaltungen der Erfindung sind in den übrigen Ansprüchen, der nachfolgenden Beschreibung sowie der Zeichnung angegeben.

Grundgedanke der vorliegenden Erfindung ist es, motorseitig Mittel vorzusehen, mit denen eine eindeutige steuerungsseitige Identifizierung von Motortyp und/oder Aggregattyp möglich ist. Diese motorseitigen Identifizierungsmittel sind dabei so gestaltet, dass sie von der zugehörigen Steuerung erfasst und die Steuerung dann entsprechend dem ermittelten Motortyp bzw. Aggregattyp angepasst wird. Um dies konstruktiv einfach und fertigungstechnisch günstig zu erreichen, sieht die Erfindung vor, die statorseitig am Motor ohnehin vorgesehene Steckerleiste, welche eine Vielzahl von Kontakten aufweist, die zur Kontaktierung mit einer entsprechenden Stecker- bzw. Kontaktleiste der Steuerung vorgesehen sind und zum elektrischen Anschluss dienen, dahingehend zu erweitern, dass einige dieser motorseitigen Kontakte nach Art eines Codes geschaltet sind und so zur Identifizierung des Aggregattyps dienen können. Diese erfindungsgemäße Lösung hat den Vorteil, dass die ohnehin vorhandene motorseitige Steckerleiste nur modifiziert werden muss, um eine Identifizierung zu ermöglichen.

Dabei erfolgt die Identifizierung vorzugsweise mittels eines binären Codes, der entweder durch Verbindung und Nichtbeschaltung bestimmter Kontakte oder auch durch Verbindung oder Nichtverbindung bestimmter Kontakte mit Masse gebildet sein kann.

Zweckmäßigerweise sind die Mittel zur Identifizierung des angeschlossenenen Motortyps bzw. Aggregattyps unmittelbar in der Steuerung vorgesehen, so dass eine selbsttätige Anpassung der Steuerung an den angeschlossenen Motor bzw. das angeschlossene Aggregat erfolgen kann.

Da moderne Steuerungen regelmäßig digitalisiert sind, ist es zweckmäßig, auch den Identifizierungscode digital zu gestalten. Darüber hinaus bietet der digitale Code in der Regel eine höhere Übertragungssicherheit. Innerhalb der Steuerung sind dann zweckmäßigerweise zu jedem Identifizierungscode Betriebsparameter abgespeichert, die innerhalb der Steuerung nach Erfassung des Identifizierungscodes selbsttätig voreingestellt werden. Auf diese Weise können der Steuerung praktisch beliebige Betriebsparameter vorgegeben werden, beispielsweise eine maximale Drehzahl, eine maximale Betriebstemperatur, ein Kennfeld oder andere für den Betrieb des Aggregats wesentliche Daten.

Wenn als Motor ein Dreiphasenmotor eingesetzt ist, ist es besonders zweckmäßig, eine elektrische Codierung vorzusehen. Bei einer Vielzahl von Kreiselpumpenaggregaten kleiner und mittlerer Leistung weist der Stator des Elektromotors, der üblicherweise ein Dreiphasenmotor ist, eine Doppelkontaktleiste mit zwei Reihen von sieben bzw. acht Kontakten auf, durch die die Wicklungsenden und mehrere Wicklungsteile zum Zwecke der Drehzahländerung kontaktiert und über die der elektrische Anschluss des Motors erfolgt. Bei einer solchen Anordnung sind vorzugsweise drei dieser Kontakte zur Bildung des Identifizierungscodes sowie ein Massekontakt verwendet. Eine solche Anordung ermöglicht es, das Aggregat praktisch ohne nennenswerte bauliche Veränderungen wahlweise mit elektronischer Frequenzumrichtersteuerung oder auch mit konventioneller Stufenschaltersteuerung auszustatten. Hierdurch können die Stückzahlen bei der Motorherstellung weiter erhöht und die Herstellungskosten somit niederig gehalten werden.

Auch kann es zweckmäßig sein, für derartige Baureihen, die mit und ohne elektronische Frequenzumrichtersteuerung angeboten werden, die motor- und steuerungsseitigen Mittel zur Identifizierung als gesonderte Module auszubilden und nur bei den Ausführungen vorzusehen, bei denen diese Erkennungsfunktionen gewünscht und zweckmäßig sind. Zweckmäßigerweise werden diese Module außen am Motor und außen am Steuerungsgehäuse angebracht, sie können jedoch auch integriert sein.

Der wesentliche Vorteil der vorliegenden Erfindung liegt darin, dass gegebenenfalls mit geringem technischen Aufwand eine zuverlässige steuerungsseitige Identifizierung des angeschlossenen Motors bzw. Aggregats möglich ist, ohne motorseitig aufwändige bauliche Veränderungen vornehmen zu müssen. Die hierfür steuerungsseitig erforderlichen Vorkehrungen sind in der Regel wenig aufwändig, da die Steuerungen regelmäßig digitalisiert sind und somit lediglich die erforderlichen Zusatzfunktionen in der Regel softwaremäßig implementiert werden müssen. Die hier vorliegende Erfindung erlaubt es, mit geringem technischen Aufwand die Anzahl der Steuerungstypen für eine Reihe von Pumpenaggregattypen, die auch mit gleichen Motoren arbeiten können, erheblich zu reduzieren, da eine erfindungsgemäße Steuerung das angeschlossene Aggregat selbsttätig erkennt und sich diesem Aggregat entsprechend voreinstellt. Hierdurch wird nicht nur die Typenvielfalt bei der Herstellung verringert, sondern auch die Lagerhaltung reduziert. Im Reparaturfall kann ein Austausch der Steuerung durch weitgehend ungeschultes Personal erfolgen, es sind nur wenige Steuerungstypen zu bevorraten, um eine Vielzahl von Aggregattypen versorgen zu können.

Die Erfindung ist nachfolgend anhand eines in der Zeichnung dargestellten Ausführungsbeispiels näher erläutert. Es zeigen:
- Fig.1: in vereinfachter perspektivischer Darstellung den Stator eines Dreiphasenmotors,
- Fig. 2: eine perspektivische Ansicht von unten der Unterseite eines Steuerungsgehäuses und
- Fig. 3: ein Blockschaltbild, das den steuerungsseitigen Anschluss der Steckerleiste darstellt.

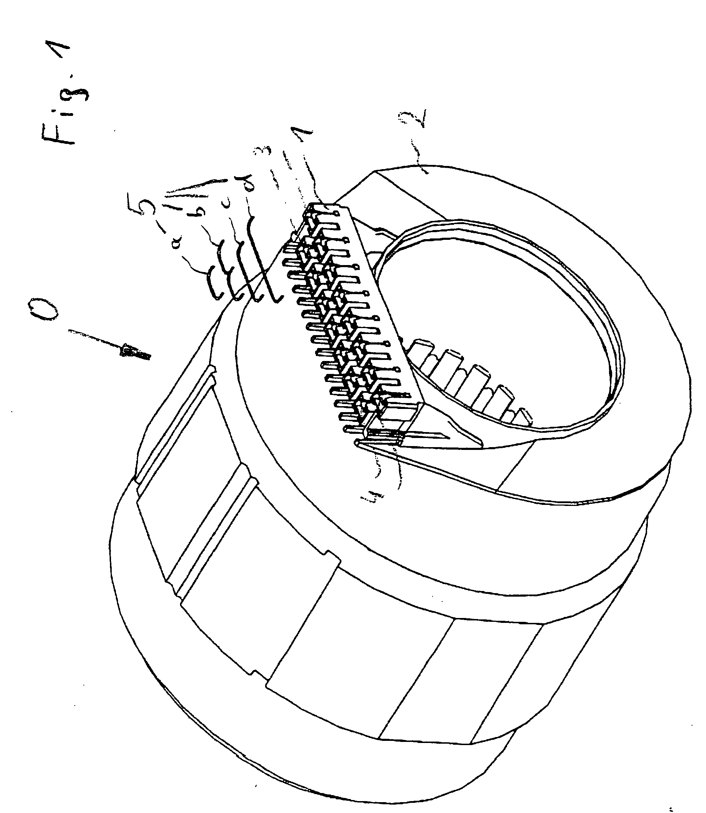

Bei dem in Fig. 1 dargestellten Stator 0 handelt es sich um den eines Dreiphasenasynchronmotors, wie er heute regelmäßig bei frequenzumrichtergesteuerten Pumpenaggregaten eingesetzt wird. Ein solcher Stator kann jedoch entsprechend modifiziert auch für einen Permanentmagnetmotor eingesetzt werden. Er weist, wie bei Motoren dieser Art üblich, eine Steckerleiste 1 an einer Wicklungskopfschutzklappe 2 auf.

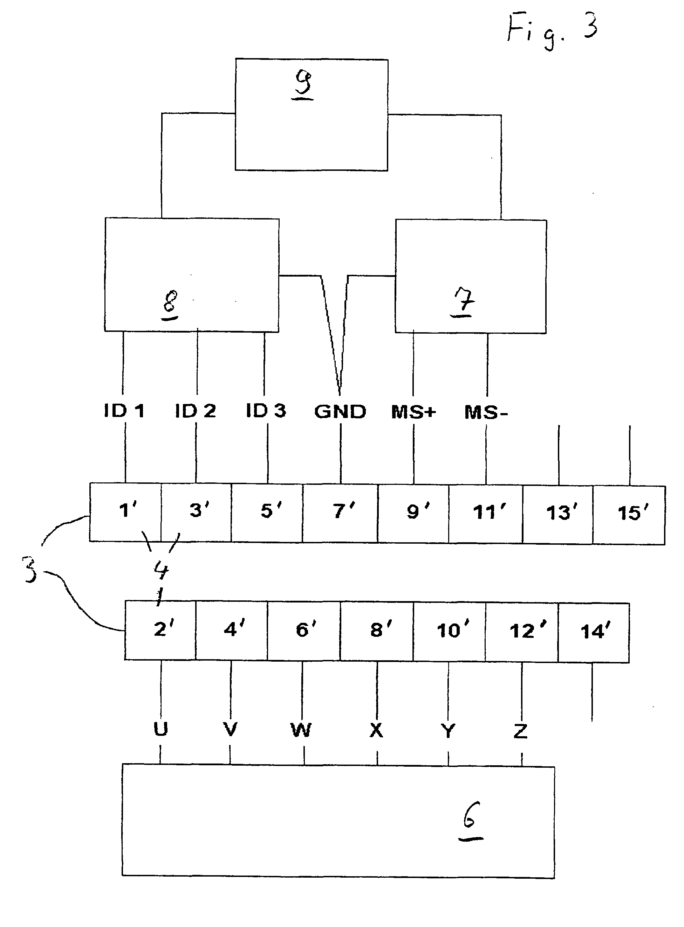

Diese Steckerleiste 1 besteht aus zwei Reihen von sieben bzw. acht elektrischen Kontakten 4, die in Fig. 3 im Einzelnen dargestellt sind. Diese Steckerleiste 1 ist herstellerseitig standardisiert und findet bei einer Vielzahl von Motoren unterschiedlicher Typen und Leistung Verwendung, wobei diese Motoren wahlweise mit einer Frequenzumrichtersteuerung oder auch einer mechanischen Stufenschaltung hergestellt werden. Für die mit Frequenzumrichtersteuerung auszurüstenden Motoren sind in dieser Steckerleiste vier elektrische Kontakte 4 vorgesehen, von denen einer den gemeinsamen Masseanschluss GND bildet. Je nach Aggregattyp sind von diesen in Fig. 3 mit ID 1, ID 2 und ID 3 bezeichneten Kontakten die Kontakte ID 1, ID 2, ID 3 nicht, einer, zwei oder alle drei mit Masse (GND) verbunden. Die entsprechenden Brücken 5 sind innerhalb der Steckerleiste 1 motorseitig angeordnet und in Fig. 1 durch die Brücken 5a bis d beispielhaft dargestellt. Hierdurch geben sich folgende Codevarianten:
1. ID 1, ID 2 und ID 3 nicht mit GND verbunden,
2. nur ID 1 mit GND verbunden,
3. nur ID 2 mit GND verbunden,
4. nur ID 3 mit GND verbunden,
5. ID 1 und ID 2 mit GND verbunden,
6. ID 2 und ID 3 mit GND verbunden,
7. ID 1 und ID 3 mit GND verbunden,
8. ID 1, ID 2 und ID 3 mit GND verbunden.

Auf diese Weise können acht verschiedene motorseitige Codes gebildet werden. Die Anzahl der möglichen Codes kann durch Hinzufügen einer oder mehrerer Kontakte erweitert werden. Auch kann statt eines digitalen Codes ein analoger Code, beispielsweise durch abgestufte Widerstände zwischen zwei Kontakten gebildet werden. Die vorstehend beschriebene Codebildung ist jedoch besonders günstig, da bei Verwendung des Motors in Verbindung mit einer Frequenzumrichtersteuerung ein Teil der sonst für die Stufenschaltung erforderlichen elektrischen Kontakte 4 nicht belegt ist und in soweit für die Codierung genutzt werden kann.

Die in Fig. 3 dargestellten Kontakte 4 der Steuerung sind in zwei Reihen angeordnet, wobei die in der unteren Reihe mit U V W X Y Z gekennzeichneten die Herausführung der Wicklungsenden der Dreiphasenwicklungen repräsentieren. Mit MS+ und MS-werden Sensorsignale herausgeführt, die zusammen mit den Codierungskontakten ID 1 bis 3 den Masseanschluss GND gemeinsam nutzen.

Während die zu den Wicklungen führenden Kontakte U V W X Y Z innerhalb der Steuerung zu einer Leistungsbaugruppe 6 (Powermodul) geführt sind, sind die Kontakte MS+ und MS- mit einem Sensor-Interface 7 leitungsverbunden. Für die die codesübertragenden Kontakte ID 1, ID 2 und ID 3 ist ein Identifizierungs-Interface 8 vorgesehen. Mittels dieses Identifizierungs-Interfaces 8 wird ermittelt, welche der Kontakte ID 1 bis 3 mit GND verbunden sind oder nicht und damit das angeschlossene Aggregat identifiziert und diese Daten in einem Mikroprozessor 9 weiterverarbeitet, der anhand des ermittelten Aggregats zuvor für dieses Aggregat eingegebene Parameter innerhalb der Steuerung aktiviert.

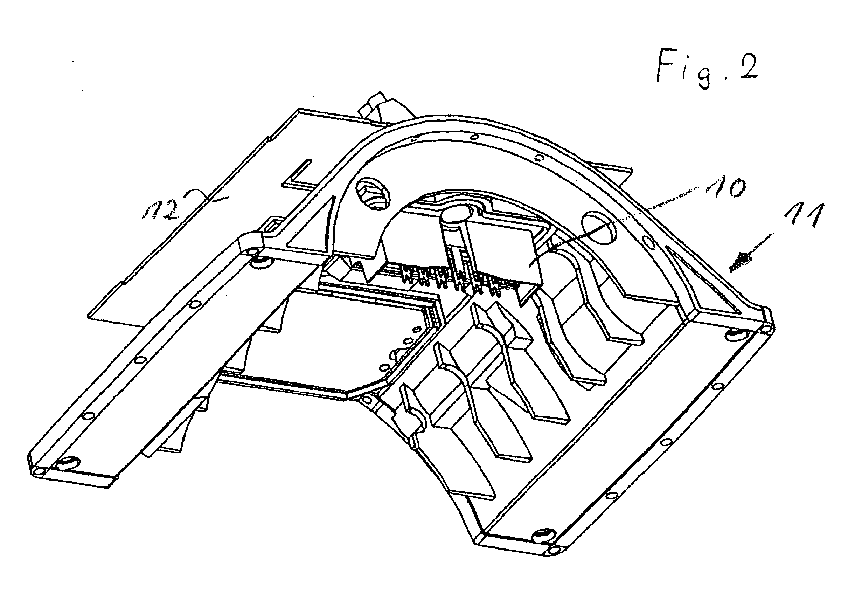

Der Anschluss der Steckerleiste 1 erfolgt in an sich bekannter Weise durch Aufsetzen einer entsprechend ausgebildeten Steckerleiste 10, die an der Unterseite eines Steuerungsgehäuses 11 angeordnet ist, dessen motorseitiger Teil in Fig. 2 dargestellt ist. Wie anhand von Fig. 2 sichtbar ist, ist innerhalb des Steuerungsgehäuses 11 eine Platine 12 vorgesehen, über die die Steckerleiste 10 mit den entsprechend steuerungsseitigen Anschlüssen verbunden ist. Auf dieser Platine 12 sind der Mikroprozessor 9 sowie das Sensor-Interface 7 und das Identifiziierungs-Interface 8 angeordnet.

Die Identifizierung des Aggregats erfolgt nach Anschluss der Steuerung an das Versorgungsnetz, wobei die Steuerung so ausgelegt ist, dass eine Ansteuerung des Motors erst dann erfolgt, wenn die Identifizierung des angeschlossenen Aggregats abgeschlossen ist.

### Bezugszeichenliste

- 0 -: Stator
- 1 -: Steckerleiste
- 2 -: Wicklungskopfschutzkappe
- 3 -: Reihen von elektrischen Kontakten
- 4 -: elektrischer Kontakt
- 5 -: Brücken a - d
- 6 -: Leistungsbaugruppe
- 7 -: Sensor-Interface
- 8 -: Identifizierungs-Interface
- 9 -: Mikroprozessor
- 10 -: Steckerleiste des Steuerungsgehäuses
- 11 -: Steuerungsgehäuse
- 12 -: Platine der Steuerung

## Patentansprüche

1. Elektromotor mit elektronischer Steuerung, insbesondere mit Frequenzumrichtersteuerung, bei dem motorseitig Mittel (5) zur steuerungsseitigen Identifizierung des Motors und/oder Aggregattyps vorgesehen sind, **dadurch gekennzeichnet, dass** am Stator (0) des Motors eine Steckerleiste (1) mit einer Vielzahl von Kontakten (4) vorgesehen ist, die zur Kontaktierung mit einer Steckerleiste (10) der Steuerung vorgesehen ist, und dass einige der motorseitigen Kontakte (ID 1 - 3) nach Art eines Codes geschaltet sind und zur Identifizierung dienen.

2. Elektromotor nach Anspruch 1, **dadurch gekennzeichnet, dass** der Code binär ist und durch eine Kombination von Kurzschluss und Nichtbeschaltung der Kontakte (ID 1 - 3) gebildet ist.

3. Elektromotor nach einem der vorhergehenden Ansprüche, **dadurch gekennzeichnet, dass** der Identifizierungscode ein digitaler ist, der mittels eines Mikroprozessors (9) der Steuerung erfasst wird und dass innerhalb der Steuerung zu jedem Identifizierungscode Betriebsparameter vorgegeben sind, die vom Mikroprozessor (9) nach Erfassung des Identifizierungscodes selbsttätig voreingestellt werden.

4. Elektromotor nach einem der vorgehenden Ansprüche, **dadurch gekennzeichnet, dass** der Motor ein Dreiphasenmotor ist, dass motorseitig eine Doppelkontaktleiste (1) mit zwei Reihen von sieben bzw. acht Kontakten (4) vorgesehen ist, von denen vorzugsweise drei zur Bildung des Identifizierungscodes dienen.

## Claims

1. An electric motor with an electronic control, in particular with a frequency converter control, with which on the part of the motor, means (5) for identifying the motor and/or assembly type on the part of the control are provided, **characterised in that** a multipoint connector (1) with a multitude of contacts (4) is provided on the stator (0) of the motor, said multipoint connector being provided for contacting with a multipoint connector (10) of the control, and that some of the contacts (ID 1-3) on the motor side are connected in the manner of a code and serve for identification.

2. An electric motor according to claim 1, **characterised in that** the code is binary and is formed by a combination of short circuit and non-connecting of the contacts (ID 1-3).

3. An electric motor according to one of the preceding claims, **characterised in that** the identification code is a digital one which is detected by way of a microprocessor (9) of the control, and that within the control, operating parameters are set for each identification code, which after detecting the identification code are automatically preset by the microprocessor (9).

4. An electric motor according to one of the preceding claims, **characterised in that** the motor is a three-phase motor, that on the motor side a double contact connector (1) with two rows of seven or eight contacts (4) is provided, of which preferably three serve for forming the identification code.

## Revendications

1. Moteur électrique avec commande électronique, en pardculier avec commande de convertisseur de fréquence, dans lequel des moyens (5) sont prévus côté moteur pour l'identification côté commande du moteur et/ou du type d'unité, **caractérisé en ce qu'**il est prévu sur le stator (0) du moteur une réglette à fiches (1) avec une pluralité de contacts (4), qui est prévue pour l'établissement des contacts avec une réglette à fiches (10) de la commande, et **en ce que** certains des contacts (ID 1-3) côté moteur sont branchés à la façon d'un code et servent à l'identification.

2. Moteur électrique selon la revendication 1, **caractérisé en ce que** le code est binaire et est formé d'une combinaison de court-circuit et de non-connexion des contacts (ID 1-3).

3. Moteur électrique selon l'une des revendications précédentes, **caractérisé en ce que** le code d'identification est un code numérique, qui est enregistré au moyen d'un microprocesseur (9) de la commande et **en ce que** des paramètres de service, qui sont préréglés automatiquement par le microprocesseur (20) après l'enregistrement du code d'identification, sont prédéfinis à l'intérieur de la commande pour chaque code d'identification.

4. Moteur électrique selon l'une des revendications précédentes, **caractérisé en ce que** le moteur est un moteur triphasé, **en ce qu'**une réglette à double contact (1) est prévue côté moteur avec deux rangées de sept ou huit contacts (4), dont de préférence trois servent à la formation du code d'identification.
